# EUROPÄISCHE PATENTANMELDUNG

(11) **EP 4 548 750 A1**
(43) Veröffentlichungstag der Anmeldung: **07.05.2025**
(21) Anmeldenummer: 24186743.1
(22) Anmeldetag: 05.07.2024
(51) Int. Cl.: A01G 9/029

(54) **BEHÄLTER**

(30) Priorität: 06.11.2023 AT 508832023
(71) Anmelder: Witasek, Peter, 9560 Feldkirchen (AT)
(72) Erfinder: Witasek, Peter, 9560 Feldkirchen (AT)
(74) Vertreter: Beer & Partner Patentanwälte KG

(57) **Zusammenfassung**

Ein Behälter (1) umfasst eine Röhre (2), in der Substrat (18) und in das Substrat (18) eingesetzt eine Pflanze (20) vorgesehen ist. An dem in Gebrauchslage oberen Ende des Behälters (1) ist eine trichterförmige Erweiterung (3) vorgesehen. Von der Erweiterung (3) stehen Dorne oder Spitzen (15), die als Verbissschutz dienen, ab. Von der Außenseite der Röhre (2) stehen schraubenlinienförmige Flügel (6) ab. Die Flügel (6) bewirken nach dem Abwerfen des Behälters (1) eine den Behälter (1) während des Falls stabilisierende Drehung des Behälters (1) um die Achse seiner Röhre (2). Zwischen den Flügeln (6) sind Schlitze (4) vorgesehen.

## Beschreibung

Die Erfindung betrifft einen Behälter mit den Merkmalen des einleitenden Teils von Anspruch 1.

Aus US 2022/0117150 A1 ist es bekannt, Pflanzungen vorzunehmen, indem Pflanzen und Substrat enthaltende Pflanztöpfe von Drohnen abgeworfen werden. Die Spitze des Pflanztopfes kann gewichtsschwer ausgebildet sein.

WO 2019/226208 A1 betrifft Pflanztöpfe, die Substrat und Pflanzen enthalten und die aus der Luft abgeworfen werden können, um Pflanzen zu setzen. Die Pflanztöpfe weisen an ihrem unteren Ende eine konische Form mit Spitze auf, um das Eindringen in den Boden zu verbessern.

EP 2 106 682 A1 beschreibt ein Aufforsten, bei dem Pflanzen aus der Luft abgeworfen werden sollen. Die Pflanzen sind in Pflanztöpfen aus Holz oder Naturfasern enthalten. Die Pflanztöpfe können kegelförmig mit nach unten weisender Spitze ausgebildet sein.

US 2016/0234997 A1 beschreibt Pflanztöpfe, die zum Aufforsten aus der Luft abgeworfen werden können. Die Pflanztöpfe tragen Flügel, um die Pflanztöpfe nach dem Abwerfen während des Falls zu stabilisieren.

CA 908507 beschreibt das Ausführen von Pflanzungen durch Abwerfen von Pflanztöpfen aus der Luft. Die Pflanztöpfe enthalten eine Pflanze und weisen Löcher auf. An dem dem spitzen Ende gegenüberliegenden (offenen) Ende der Pflanztöpfe sind Stabilisierungsflügel vorgesehen.

Der Erfindung liegt die Aufgabe zugrunde, einen Behälter, in dem eine Pflanze, insbesondere eine Jungpflanze, aufgenommen ist, zur Verfügung zu stellen, der das Setzen der Pflanze, wie der Jungpflanze, erleichtert und zusätzlich einen Schutz der Pflanze, insbesondere der Jungpflanze, vor Verbiss durch Wildtiere bietet.

Zusätzlich soll der erfindungsgemäße Behälter in Ausführungsformen dazu geeignet sein, dass er beim Setzen von Pflanzen, wie Jungpflanzen, aus der Luft, beispielsweise aus einem Hubschrauber oder einer Drohne, abgeworfen werden kann.

Gelöst wird diese Aufgabe erfindungsgemäß mit einem Behälter, der die Merkmale von Anspruch 1 aufweist.

Bevorzugte und vorteilhafte Ausgestaltungen der Erfindung sind Gegenstand der Unteransprüche.

Dank der Ausformungen, die an dem Behälter vorgesehen sind, ist je nach Ausbildung der Ausformungen ein das Abwerfen aus der Luft unterstützender und/oder ein einen Verbissschutz bildender Effekt erreicht.

Es besteht auch die Möglichkeit, dass die Ausformungen sowohl das Abwerfen aus der Luft unterstützen als auch einen Verbissschutz bilden.

In einer möglichen Ausführungsform des Behälters kann sich dieser dadurch auszeichnen, dass im Bereich des Substrates in der Wand des Behälters vorzugsweise in Richtung der Achse des Behälters verlaufende Schlitze vorgesehen sind.

In einer möglichen Ausführungsform des Behälters kann sich dieser dadurch auszeichnen, dass am in Gebrauchslage unteren Rand des Behälters vorstehende Spitzen vorgesehen sind.

In einer möglichen Ausführungsform des Behälters kann sich dieser dadurch auszeichnen, dass die Spitzen dreieckförmig oder im Wesentlichen trapezförmig ausgebildet sind und dass die Spitzen sich von dem Behälter weg verjüngend ausgebildet sind.

In einer möglichen Ausführungsform des Behälters kann sich dieser dadurch auszeichnen, dass der Behälter einen als Röhre ausgebildeten Teil umfasst.

In einer möglichen Ausführungsform des Behälters kann sich dieser dadurch auszeichnen, dass an der Außenseite des Behälters, insbesondere der Röhre, wenigstens ein schraubenlinienförmig verlaufender Flügel vorgesehen ist.

In einer möglichen Ausführungsform des Behälters kann sich dieser dadurch auszeichnen, dass die Schlitze im Bereich der Röhre, in welchen Substrat aufgenommen ist, parallel zu dem Flügel ausgerichtet, also im Wesentlichen schraubenlinienförmig, sind.

In einer möglichen Ausführungsform des Behälters kann sich dieser dadurch auszeichnen, dass an dem in Gebrauchslage oben liegenden Ende des Behälters eine trichterförmige Erweiterung vorgesehen ist.

In einer möglichen Ausführungsform des Behälters kann sich dieser dadurch auszeichnen, dass an dem in Gebrauchslage oben liegenden Ende des Behälters ein als Rüsselkäferschutz dienender, nach außen und schräg nach unten weisender, Bereich vorgesehen ist.

In einer möglichen Ausführungsform des Behälters kann sich dieser dadurch auszeichnen, dass von dem in Gebrauchslage oben liegenden Ende des Behälters, insbesondere der Röhre, ausgehende Vorsprünge vorgesehen sind.

In einer möglichen Ausführungsform des Behälters kann sich dieser dadurch auszeichnen, dass die Vorsprünge von der Achse der Röhre weg schräg nach außen weisend ausgebildet sind.

In einer möglichen Ausführungsform des Behälters kann sich dieser dadurch auszeichnen, dass die Vorsprünge stäbchen- oder stachelförmig ausgebildete Spitzen oder Dorne sind.

In einer möglichen Ausführungsform des Behälters kann sich dieser dadurch auszeichnen, dass die Vorsprünge an dem in Gebrauchslage oben liegenden Ende der Röhre als einen Drall bewirkende Flügel ausgebildet sind.

In einer möglichen Ausführungsform des Behälters kann sich dieser dadurch auszeichnen, dass die Anformungen an einem an die Röhre anzusetzenden Ansatzteil vorgesehen sind.

In einer möglichen Ausführungsform des Behälters kann sich dieser dadurch auszeichnen, dass an der Innenseite der Röhre längslaufende Rippen vorgesehen und in dem Ansatzteil gegengleich geformte Nuten ausgebildet sind.

In einer möglichen Ausführungsform des Behälters kann sich dieser dadurch auszeichnen, dass an dem Ansatzteil Rastvorsprünge und in der Wand der Röhre Rastausnehmungen, in welche die Rastvorsprünge bei angesetztem Ansatzteil eingreifen, vorgesehen sind.

In einer möglichen Ausführungsform des Behälters kann sich dieser dadurch auszeichnen, dass die Röhre im Wesentlichen die Form eines Zylinders aufweist.

In einer möglichen Ausführungsform des Behälters kann sich dieser dadurch auszeichnen, dass die Röhre im Wesentlichen die Form eines Mantels eines Kegelstumpfes aufweist.

In einer möglichen Ausführungsform des Behälters kann sich dieser dadurch auszeichnen, dass der Bereich für die Aufnahme von Substrat im Bereich der Röhre mit kleinerem Durchmesser vorgesehen ist.

In einer möglichen Ausführungsform des Behälters kann sich dieser dadurch auszeichnen, dass der Behälter die Form des Mantels eines Kegels hat.

In einer möglichen Ausführungsform des Behälters kann sich dieser dadurch auszeichnen, dass von dem in Gebrauchslage oberen Rand des Behälters nach innen weisende, vorzugsweise dreieckförmige, Vorsprünge vorgesehen sind.

In einer möglichen Ausführungsform des Behälters kann sich dieser dadurch auszeichnen, dass an der Außenseite des Endes der Röhre mit kleinerem Durchmesser eine schraubenlinienförmige Rippe vorgesehen ist.

Weitere Einzelheiten, Merkmale und Vorteile der Erfindung ergeben sich anhand der nachfolgenden Beschreibung von Ausführungsbeispielen des Behälters anhand der Zeichnungen. Es zeigt:
- Fig. 1: eine erste Ausführungsform des Behälters,
- Fig. 2: eine Ausführungsform des Behälters mit Flügeln,
- Fig. 3: den Behälter aus Fig. 2 in Schrägansicht,
- Fig. 4: einen Teil eines Behälters,
- Fig. 5: einen konischen Teil eines Behälters,
- Fig. 6: einen konischen Teil eines Behälters,
- Fig. 7: einen das obere Ende eines Behälters bildenden Ansatz,
- Fig. 8: eine abgeänderte Ausführungsform des Ansatzes aus Fig. 7,
- Fig. 9: einen Zwischenteil mit schraubenlinienförmigen Flügeln,
- Fig. 10: einen Ansatz, der einen umgebogenen Rand aufweist,
- Fig. 11: einen Ansatz mit als Verbissschutz wirkenden Spitzen,
- Fig. 12: eine abgeänderte Ausführungsform des Ansatzes aus Fig. 11 mit einen Drall bewirkenden Spitzen,
- Fig. 13: einen kegelförmigen Behälter im Schnitt,
- Fig. 14: den kegelförmigen Behälter aus Fig. 13 in Draufsicht und
- Fig. 15: eine weitere Ausführungsform eines erfindungsgemäßen Behälters.

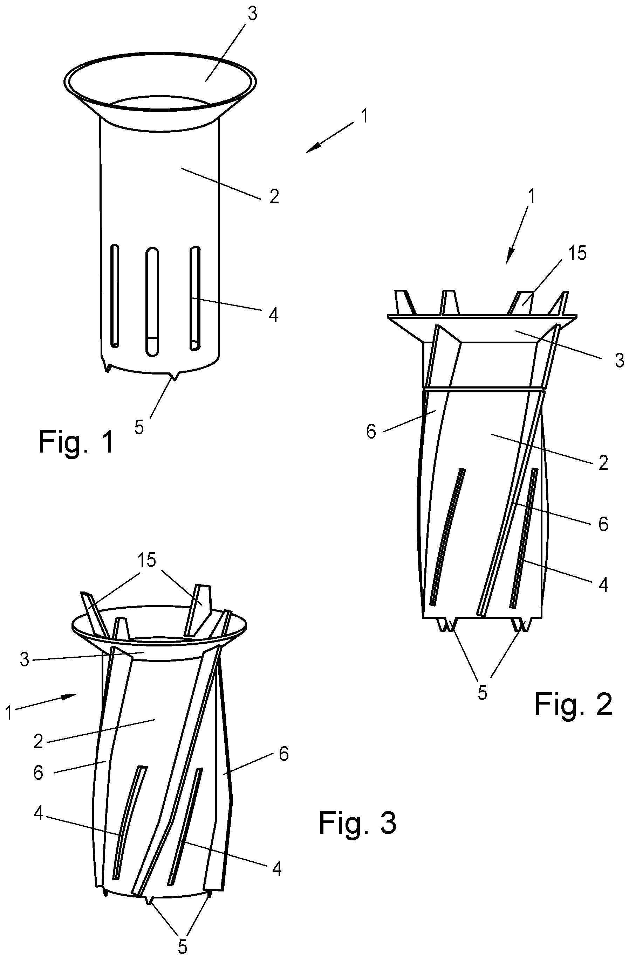

Ein erfindungsgemäßer Behälter 1 weist gemäß Fig. 1 eine Röhre 2 und an dem in Gebrauchslage oberen Ende der Röhre 2 eine trichterförmige Erweiterung 3 auf. In jenem Bereich der Röhre 2, in dem Substrat für die Pflanze aufgenommen ist, sind längslaufende Schlitze 4 vorgesehen.

Am unteren Rand der Röhre 2 sind im Wesentlichen dreieckförmige Spitzen 5 vorgesehen, die sich in den Boden eingraben, wenn der Behälter 1 zum Setzen einer in den Behälter 1 aufgenommenen Pflanze (Jungpflanze) auf den Boden aufgesetzt wird oder nach einem Abwurf auf den Boden auftrifft.

Bei der Ausführungsform des Behälters 1 gemäß Fig. 2 und 3 sind an der Außenseite des Behälters 1 im Bereich der Röhre 2 mehrere schraubenlinienförmige Flügel 6 vorgesehen, die beim Abwerfen des Behälters 1 aus der Luft bewirken, dass der Behälter 1 durch Drehen um seine Achse stabilisiert ist und nicht taumelt.

Bei der Ausführungsform der Fig. 2 und 3 sind die Schlitze 4 parallel zu den Flügeln 6 ausgerichtet, verlaufen also schraubenlinienförmig.

Fig. 2 zeigt, dass der obere Teil des Behälters 1 mit der trichterförmigen Erweiterung 3 als gesonderter Ansatzteil 7 ausgebildet sein kann.

Fig. 2 und 3 zeigen, dass am unteren Rand der Röhre 2 des Behälters 1 auch im Wesentlichen trapezförmig ausgebildete Spitzen 5 vorgesehen sein können, wobei sich die Spitzen 5 vom unteren Rand der Röhre 2 weg verjüngen.

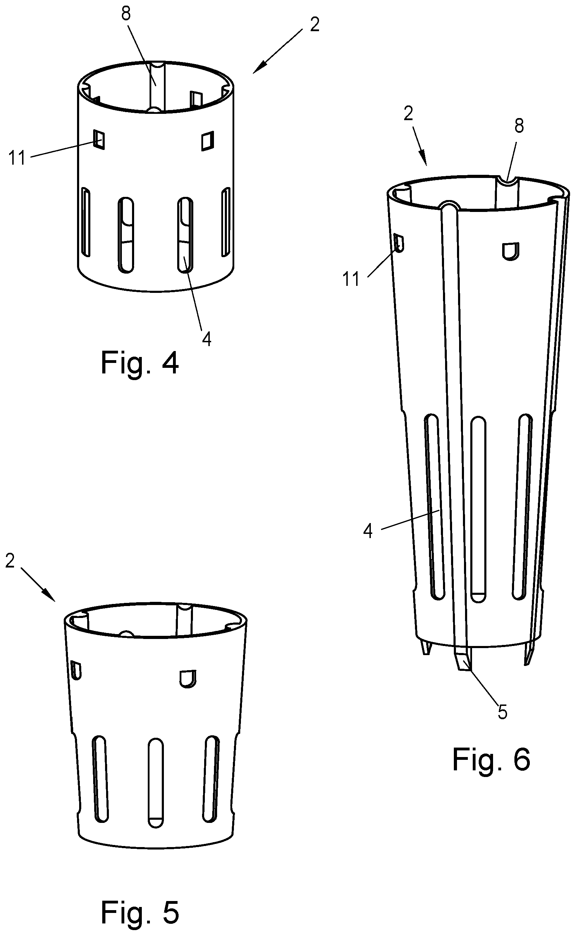

Fig. 4 zeigt einen Teil der Röhre 2 eines erfindungsgemäßen Behälters 1, an den der Ansatzteil 7 angesetzt werden kann, um einen erfindungsgemäßen Behälter 1 zu bilden. Dabei ist der Teil der Röhre 2 gemäß Fig. 4 im Wesentlichen zylindermantelförmig ausgebildet.

Bei der Ausführungsform gemäß Fig. 5 hat der Teil der Röhre 2 des erfindungsgemäßen Behälters 1 im Wesentlichen die Form des Mantels eines Kegelstumpfes.

Fig. 6 zeigt eine weitere Ausführungsform des Teils eines erfindungsgemäßen Behälters 1 mit längslaufenden Rippen 8, mit längslaufenden Schlitzen 4 und mit trapezförmigen Spitzen 5 am unteren Rand der Röhre 2.

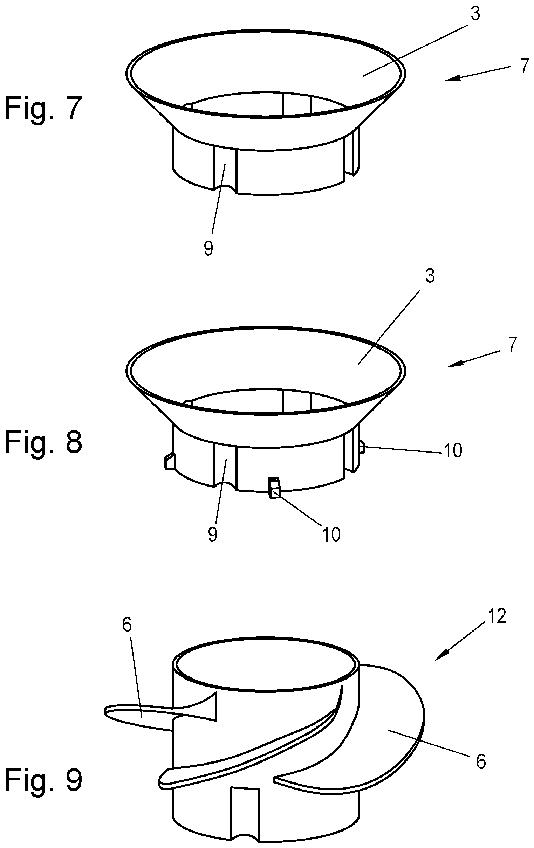

Die Fig. 7 bis 12 zeigen mögliche Ausführungsformen der Ansatzteile 7, die an der Röhre 2 des erfindungsgemäßen Behälters 1 gemäß Fig. 4 bis 6 angesetzt werden können.

Fig. 7 zeigt einen Ansatzteil 7, der eine trichterförmige Erweiterung 3 trägt und Nuten 9 aufweist, in welche an der Röhre 2 des Behälters 1 vorgesehene, nach innen weisende, Rippen 8 eingreifen.

Fig. 8 zeigt, dass an dem Ansatzteil 7 zusätzlich Rastvorsprünge 10 vorgesehen sein können, die in Ausnehmungen 11 in der Röhre 2 des Behälters 1 einrasten, um den Ansatzteil 7 sicher an der Röhre 2 festzuhalten.

Fig. 9 zeigt einen Zwischenteil 12, der zwischen der Röhre 2 und einem Ansatzteil 7 eingesetzt werden kann. Der Zwischenteil 12 trägt im gezeigten Ausführungsbeispiel mehrere schraubenlinienförmig verlaufende Flügel 6. Der Zwischenteil 12 kann auch so wie der Ansatzteil 7 verwendet werden.

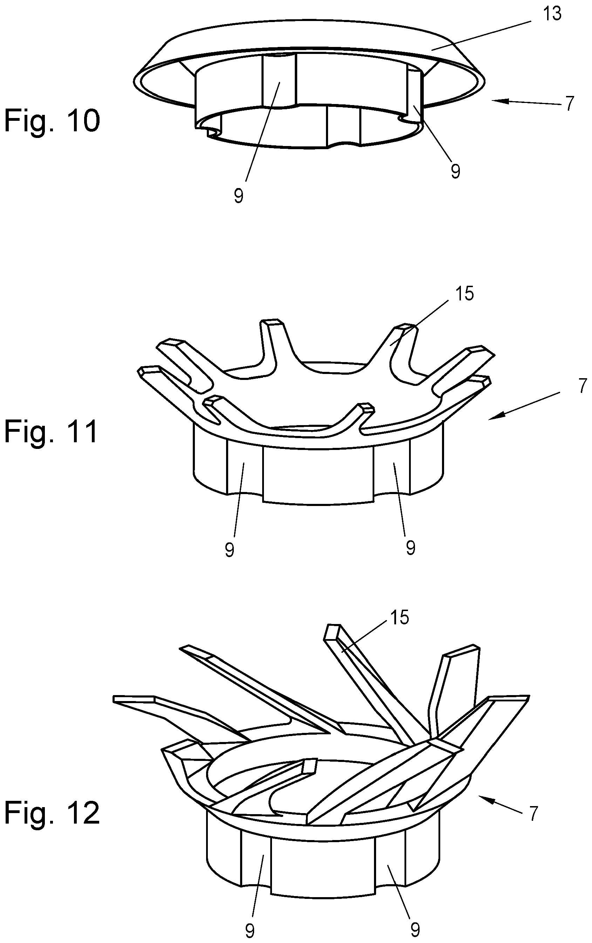

Fig. 10 zeigt einen Ansatzteil 7, der an der Röhre 2 an ihrem in Gebrauchslage oberen Ende angesetzt werden kann, um einen Behälter 1 zu schaffen, der oben einen nach unten und nach außen umgebogenen Bereich 13, der als Rüsselkäferschutz wirkt, aufweist.

Fig. 11 und 12 zeigen einen Ansatzteil 7, der an seinem in Gebrauchslage oberen, freien Rand mehrere nach außen weisende Spitzen oder Dorne 15 aufweist, sodass ein Verbissschutz für die Pflanze, wie die Jungpflanze, gebildet ist. Die Spitzen, Zacken oder Dorne 15 an den Ansatzteilen gemäß Fig. 11 und 12 können länger als in Fig. 11 und 12 dargestellt ausgebildet sein.

Fig. 12 zeigt, dass die den Verbissschutz bildenden Spitzen, Zacken oder Dorne 15 als propellerartige Flügel ausgebildet sein können, die ein stabilisierendes Drehen des Behälters 1 um seine Achse ergeben, wenn er aus der Luft abgeworfen wird.

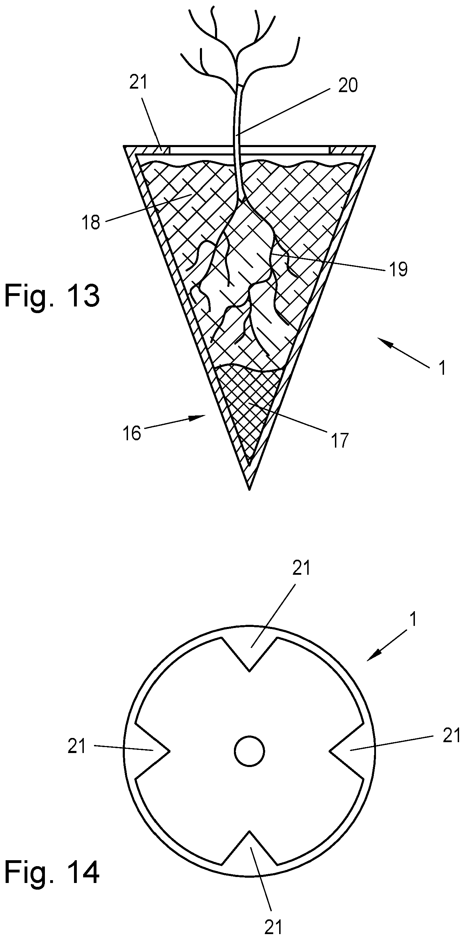

In der in Fig. 13 gezeigten Ausführungsform ist der Behälter 1 als Kegel ausgebildet, der im Bereich seines spitzen Endes 16 eine Beschwerung 17 in Form eines gewichtsschweren Körpers aus Sand oder Kies aufweist, der einen Wasserspeicher, z.B. eine wasserspeichernde Substanz auf Basis eines Alginates, enthalten kann. In dem oberen Bereich des Behälters 1 ist als Substrat 18 Pflanzerde enthalten, sodass die Wurzeln 19 der Pflanze 20 sicher wachsen können.

An dem oberen Rand des kegelförmigen Behälters 1 von Fig. 13 und 14 sind nach innen weisende Vorsprünge 21 vorgesehen, die dazu dienen, das Substrat 18 (Pflanzerde) im Inneren des Behälters 1 zurückzuhalten.

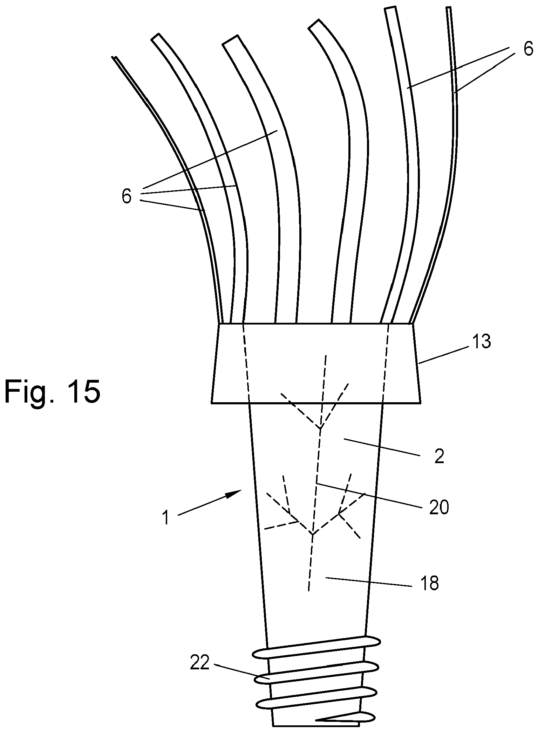

Bei der in Fig. 15 gezeigten Ausführungsform ist der Behälter 1 als konische Röhre 2 ausgebildet, deren oberer Rand einen nach außen und unten umgebogenen Bereich 13 aufweist, sodass ein Rüsselkäferschutz gebildet ist.

Im unteren Bereich des Behälters 1 ist das Substrat 18 und gegebenenfalls als Beschwerung 17 ein gewichtsschwerer Körper enthalten. An der Außenseite des unteren Endes des Behälters 1 von Fig. 15 ist eine schraubenlinienförmig verlaufende Rippe 22 vorgesehen, sodass sich eine Art Gewinde ergibt.

Von dem oberen Teil des nach außen umgebogenen Bereichs 13 stehen mehrere Flügel 6 ab, die beim Abwerfen des Behälters 1 gemäß Fig. 15 aus der Luft eine Drehung um die Achse des Behälters 1 bewirken, sodass dieser beim Abwerfen aus der Luft stabilisiert ist und nicht trudelt oder taumelt.

Mit dem durch die Rippe 22 gebildeten Gewinde schraubt sich der Behälter 1, der sich nach dem Abwerfen um seine Achse dreht, mehr oder weniger weit in den Boden, so dass ein sicherer Sitz des Behälters 1 im Boden erreicht wird.

Der Werkstoff des Behälters 1 gemäß der Erfindung kann kompostierbar und biologisch abbaubar, oder aber für besondere Anwendungsfälle nicht kompostierbar sein.

Vorteilhaft ist es bei dem erfindungsgemäßen Behälter, dass die einen geraden Flug bewirkenden Flügel 6 gleichzeitig einen Verbissschutz bilden können.

Alle beschriebenen Flügel 6 können mit dem Behälter 1 gemäß der Erfindung einstückig ausgebildet sein oder aber beispielsweise durch Ansetzen eines Ansatzteils 7 an dem Behälter 1 angebracht werden.

Alle Ausführungsformen des erfindungsgemäßen Behälters können in der Wand des Behälters einen Längsschlitz (nicht gezeigt) aufweisen, sodass sich der Behälter 1 beim Wachsen der Pflanze 20 aufweiten kann. Alternativ kann in der Wand des Behälters 1 eine längslaufende Sollbruchstelle (Schwächungslinie) vorgesehen sein, entlang welcher Sollbruchstelle der Behälter 1 reißt, so dass ein Aufweiten des Behälters 1 erlaubt ist, wenn die Pflanze 20 wächst.

Insbesondere wenn in dem Behälter 1 Jungpflanzen enthalten sind, können diese in dem erfindungsgemäßen Behälter 1 gezogen werden. Alternativ werden außerhalb des Behälters 1 gezogene Jungpflanzen in den Behälter 1 eingesetzt.

Die in dem erfindungsgemäßen Behälter 1 vorgesehenen Schlitze 4 oder andere Öffnungen erlauben es, dass die Wurzeln der Pflanze durch die Wand des Behälters 1 nach außen wachsen und das Wachsen der Pflanze 20 nicht behindert ist.

In Ausführungsformen des erfindungsgemäßen Behälters 1 ist im Bereich des in Gebrauchslage unteren Drittels des Behälters 1 als Substrat 18 Steinwolle, Schaum, mineralisches Gemenge oder dgl. enthalten, wobei in dem Substrat 18 ein wasserhaltiges Mittel enthalten sein kann.

Die in einer Ausführungsform des erfindungsgemäßen Behälters 1 vorgesehenen, als Wildverbissschutz dienenden, Spitzen, Zacken oder Dorne 15 können auch lang und dünn ausgebildet sein, um den (Wild-)Verbissschutz zu verbessern und wirksam zu gestalten.

Das in dem Substrat 18 enthaltene, wasserspeichernde Mittel kann ein Alginat, Hydrogel usw. sein. Dieser Wasserspeicher ermöglicht ein sicheres Anwachsen der Pflanze.

In dem Substrat 18 kann zur Förderung des Wachstums der Pflanze 20, insbesondere der Jungpflanze, auch ein passender Dünger vorgesehen sein.

In den meisten Ausführungsformen des erfindungsgemäßen Behälters 1 ist dieser am unteren Ende offen, was den vorteilhaften Effekt hat, dass das in dem Behälter 1 vorgesehene Substrat 18 beim Aufprall eines aus der Luft abgeworfenen Behälters 1 nach unten gedrückt wird und sich mit dem Boden, auf den der Behälter 1 auftrifft, verbindet, sodass nicht nur ein sicheres Anwachsen der Pflanze 20, sondern auch ein guter Stand des Behälters 1 gewährleistet ist.

Wenn in dem Behälter 1 eine Beschwerung 17 in Form eines gewichtsschweren Körpers vorgesehen ist, ist es in Betracht gezogen, in den gewichtsschweren Körper Löcher, die von Wurzeln 19 der Pflanze 20 durchwachsen werden können, vorzusehen. Zusätzlich oder anstelle der Löcher kann der gewichtsschwere Körper an seinem Außenrand Nuten oder Kerben aufweisen, so dass der Körper von Wurzeln der Pflanze 20 umwachsen werden kann.

Zusammenfassend kann ein Ausführungsbeispiel der Erfindung wie folgt beschrieben sein:
Ein Behälter 1 umfasst eine Röhre 2, in der Substrat 18 und in das Substrat 18 eingesetzt eine Pflanze 20 vorgesehen ist. An dem in Gebrauchslage oberen Ende des Behälters 1 ist eine trichterförmige Erweiterung 3 vorgesehen. Von der Erweiterung 3 stehen Dorne oder Spitzen 15, die als Verbissschutz dienen, ab. Von der Außenseite der Röhre 2 stehen schraubenlinienförmige Flügel 6 ab. Die Flügel 6 bewirken nach dem Abwerfen des Behälters 1 eine den Behälter 1 während des Falls stabilisierende Drehung des Behälters 1 um die Achse seiner Röhre 2. Zwischen den Flügeln 6 sind Schlitze 4 vorgesehen.

## Patentansprüche

1. Behälter (1) zum Setzen von Pflanzen (20), wie Jungpflanzen, **dadurch gekennzeichnet, dass** der Behälter (1) einen Bereich, in dem die Pflanze (20), wie Jungpflanze, enthaltendes Substrat (18) enthalten ist, und an seinem dem Aufnahmebereich für Substrat (18) gegenüberliegenden Ende eine das Abwerfen aus der Luft unterstützende und/oder einen Verbissschutz bildende Ausformung aufweist.

2. Behälter nach Anspruch 1, **dadurch gekennzeichnet, dass** im Bereich des Substrates (18) in der Wand des Behälters (1) vorzugsweise in Richtung der Achse des Behälters (1) verlaufende Schlitze (4) vorgesehen sind.

3. Behälter nach Anspruch 1 oder 2, **dadurch gekennzeichnet, dass** am in Gebrauchslage unteren Rand des Behälters (1) vorstehende Spitzen (5) vorgesehen sind.

4. Behälter nach einem der Ansprüche 1 bis 3, **dadurch gekennzeichnet, dass** der Behälter (1) einen als Röhre (2) ausgebildeten Teil umfasst.

5. Behälter nach einem der Ansprüche 1 bis 4, **dadurch gekennzeichnet, dass** an der Außenseite des Behälters (1), insbesondere der Röhre (2), wenigstens ein schraubenlinienförmig verlaufender Flügel (6) vorgesehen ist.

6. Behälter nach einem der Ansprüche 1 bis 5, **dadurch gekennzeichnet, dass** an dem in Gebrauchslage oben liegenden Ende des Behälters (1) eine trichterförmige Erweiterung (3) vorgesehen ist.

7. Behälter nach einem der Ansprüche 1 bis 6, **dadurch gekennzeichnet, dass** von dem in Gebrauchslage oben liegenden Ende des Behälters (1), insbesondere der Röhre (2), ausgehende Vorsprünge vorgesehen sind.

8. Behälter nach Anspruch 7, **dadurch gekennzeichnet, dass** die Vorsprünge an dem in Gebrauchslage oben liegenden Ende der Röhre (2) als einen Drall bewirkende Flügel ausgebildet sind.

9. Behälter nach einem der Ansprüche 1 bis 8, **dadurch gekennzeichnet, dass** die Anformungen an einem an die Röhre anzusetzenden Ansatzteil (7) vorgesehen sind.

10. Behälter nach Anspruch 9, **dadurch gekennzeichnet, dass** an dem Ansatzteil (7) Rastvorsprünge (10) und in der Wand der Röhre (2) Rastausnehmungen, in welche die Rastvorsprünge (10) bei angesetztem Ansatzteil (7) eingreifen, vorgesehen sind.

11. Behälter nach Anspruch 1, **dadurch gekennzeichnet, dass** der Behälter (1) die Form des Mantels eines Kegels hat.

12. Behälter nach Anspruch 11, **dadurch gekennzeichnet, dass** von dem in Gebrauchslage oberen Rand des Behälters (1) nach innen weisende, vorzugsweise dreieckförmige, Vorsprünge (21) vorgesehen sind.

13. Behälter nach Anspruch 11 oder 12, **dadurch gekennzeichnet, dass** an der Außenseite des Endes der Röhre (2) mit kleinerem Durchmesser eine schraubenlinienförmige Rippe (22) vorgesehen ist.
